# EUROPEAN PATENT APPLICATION

(11) **EP 4 571 271 A1**
(43) Date of publication of application: **18.06.2025**
(21) Application number: 23215570.5
(22) Date of filing: 11.12.2023
(51) Int. Cl.: G01D 21/00

(54) **MEASUREMENT SYSTEM FOR OPERATING WITH VARIOUS SENSOR HEAD TYPES**

(71) Applicant: Pepperl+Fuchs SE, 68307 Mannheim (DE)
(72) Inventor: Schaeuble, Caroline, 68307 Mannheim (DE); Höbel, Heiko, 68307 Mannheim (DE); Braunsmann, Christoph, 68307 Mannheim (DE)
(74) Representative: Banse & Steglich Patentanwälte PartmbB

(57) **Abstract**

The invention relates to a measurement system (1) comprising:
- A base unit (2) having a measurement unit (22) and a mode detector;
- A sensor head (5) for detecting a physical quantity, which is detachably electrically connected with the base unit (2), the sensor head (5) comprising:
∘ a sensing element (51) which provides an electrical property,
∘ an identification unit (54) to provide an electrical property or an identification signal,

wherein the mode detector (24) is configured to obtain an identification signal from or by means of the identification unit (54),
wherein the measurement unit (22) is configured to operate the sensing element (51) to obtain a sensor signal according to one selected operating mode selected from multiple operating modes.

## Description

### Technical field

The present invention relates to measurement systems having a base unit connectable to a sensor head selected from multiple sensor head types having different electrical and/or measurement properties. The present invention further relates to methods for operating the base unit in accordance with the connected sensor head type.

### Technical background

Measurement systems usually comprise a base unit and a sensor head. The sensor head is usually configured to detect a physical quantity and to provide an electrical representation as a sensor signal which depends on the physical quantity. The sensor signal is received or provided by the base unit, which preprocesses the electrical representation of the sensor signal and provides a digital or analogue measurement signal. The measurement signal then allows making further operations depending on the so measured physical quantity.

Often, the base unit and the sensor head are integrated in a single unit. However, if the physical quantity has to be sensed in a rough environment, such as a very high or a very low-temperature environment, in a humid environment, an under-water environment or the like, the base unit and the sensor head can be installed remote from each other, and the sensor head is connected to the base unit via a cable connection.

Furthermore, different types of sensor heads may be used with the same base unit depending on the measurement range, the sensitivity, the physical quantity to be measured, the resiliency against measurement conditions and/or the like. Therefore, it is often provided that the sensor head can be removably connected with the base unit. Also, different cable lengths of the cable connection can be provided to allow a base unit to be installed at a safe distance from the place of measurement.

It is therefore an object of the present invention to provide a measurement system comprising a base unit which can be equipped with different individual sensor head types and to perform a preprocessing of the sensor signals in accordance with the respective sensor head type currently attached.

### Summary of the present invention

This object is achieved by the measurement system with replaceable sensor heads of different sensor head types according to claim 1, a sensor head and a base unit of such a measurement system according to further independent claims.

Further embodiments are indicated in the depending subclaims.

According to a first aspect, a measurement system is provided, comprising:
- a base unit having a measurement unit and a mode detector;
- a sensor head for detecting a physical quantity, which is detachably electrically connected with the base unit, the sensor head comprising:
   ∘ a sensing element which provides an electrical property,
   ∘ an identification unit to provide an electrical property or an identification signal,
      wherein the mode detector is configured to obtain an identification signal from or by means of the identification unit,
      wherein the measurement unit is configured to operate the sensing element to obtain a sensor signal according to one selected operating mode selected from multiple operating modes.

According to a further aspect, a base unit for the above measurement system is provided, comprising:
- a measurement unit and
- a mode detector,
   wherein the mode detector is configured to obtain an identification signal via a base unit connector,
   wherein the measurement unit is configured to electrically operate sensing terminals to obtain a sensor signal according to one selected operating mode selected from multiple operating modes.

According to a further aspect, a sensor head for the above measurement system is provided, comprising:
- a sensing element which provides an electrical property,
- an identification unit.

A measurement system as described herein includes a sensor head configured to detect a physical quantity and to provide a sensor signal as an electrical representation thereof, and a base unit which performs a measurement and preprocesses the sensor signal to provide a measurement signal. The base unit may be configured to allow a specific electrical operation of or with the sensor head so that the physical quantity can be detected, and an electrical sensor signal can be retrieved by or returned to the base unit. Furthermore, any kind of filtering, preamplifying and signal improvement measures can be applied in the base unit as part of the preprocessing of the sensor signal.

The electrical property is a characteristics of the sensing element which allows to measure a variation of the sensor signal depending on a variation of the physical quantity.

The operating mode includes applying a measurement method to measure a resistance, a capacity, an inductance, a pulse response, a frequency, an amplitude or a phase shift as the sensor signal depending on the electrical property of the sensing element.

Furthermore, the operating mode may define a specific transfer function to define the generation of the sensor signal from the electrical property of the sensing element.

The sensor head may comprise a capacitive or inductive sensing element to allow the detection of a distance or presence of metallic objects in proximity to the sensor head. Particularly, the sensor head may be part of a proximity sensor system to detect the presence of a metallic object in a sensing range of the sensor head. Basically, the sensor head may include a sensing element which allows providing an electrical sensor signal when it is operated in accordance with an appropriate operation mode/operation scheme of the measurement system.

Therefore, the identification signal is received in the base unit via at least one identification terminal, and wherein the sensor signal is received in the base unit via at least one sensing terminal. So, via the at least one sensing terminal, the sensor signal can be received by the base unit. Via the at least one identification terminal, the base unit may receive information about the sensor head type, i.e. the type of the respective sensor head which is currently attached to the base unit.

It may be provided that the identification signal includes an electrical characteristics such as an impedance and/or diode characteristics, wherein the identification signal further includes information about a reference terminal against which the identification signal is obtained, such as one of the at least one sensing terminals or another one of the at least one identification terminals. The identification unit may be coupled with at least one identification terminal and either with a sensing terminal which is coupled with the sensing element or with another identification terminal.

The at least one identification terminal may be connected within the sensor head in a way to uniquely identify the type of the sensor head by providing a specific electrical characteristic. In other words, the base unit may detect an identification characteristic via the at least one identification terminal of the sensor head and associates an operating mode of the base unit according to the respective identification signal.

The at least one sensing terminal and the at least one identification terminal can be fixedly attached via a cable connection with a base unit connector. The base unit connector can be removably connected with a respective connector port of the base unit to electrically connect the at least one sensing terminal and the at least one identification terminal with respective terminals of the base unit.

The base unit may be configured, according to an operating mode, to perform an operation for reading out the sensor signal and to preprocess the sensor signal. The operating mode depends on the type of sensor head which is currently attached to the base unit. The type of sensor head can be detected/identified by measuring an electrical identification signal, which is detected by means of the identification terminal. The identification signal is related to an electrical property, such as a resistor, an inductance, a capacitance, or any semiconductor device behavior.

The identification terminal is electrically connected with an identification unit, which is individually configured according to the type of sensor head. The identification unit may be included in the sensor head. The identification unit may also be included in the cable connection along any position or in the base unit connector in case the sensor head is fixedly attached to the cable connection.

The identification unit may have a further direct electrical connection to one of the at least one sensing terminals or to another one of the identification terminals (in case of multiple identification terminals).

The identification unit may further comprise one or more identification elements including an impedance, such as a resistor, an inductor, a capacity and/or a semiconductor device, such as a diode or a transistor.

The value of the one or more identification element in the identification unit may uniquely identify the type of the sensor head so that a respective electrical characteristic which can be detected from the identification unit or by probing the identification unit, can be read out by the base unit and the operating mode of the base unit can be selected accordingly. The operating mode may determine the method of operating the sensing element to make a measurement of the physical quantity and the kind of preprocessing of the retrieved sensor signal.

In case the cable connection is removable connected to the sensor head which allows choosing different cable lengths depending on the application purpose, the sensor head may be provided with the identification unit, and the cable connection can be provided with a further identification unit which may be located along any position within the cable connection. The electrical characteristic of the further identification unit may be detected or probed by the base unit so that a respective operating mode of the base unit can be selected according to the detected electrical characteristic. This allows to consider the electrical properties of the cable connection (resistance and capacity) in the base unit by selecting the operating mode accordingly. The electrical properties of the cable connection might affect the measurement of the physical quantity and therefore should have an impact in the selection of the method of operating the sensing element to make a measurement of the physical quantity and the kind of preprocessing of the retrieved sensor signal. So, the cable connection, especially the length and the shielding of the connection can be coded by the further identification unit so that the electrical signal propagation properties of the cable connection may be considered by selecting the appropriate operating mode.

It may be provided that the at least one identification unit has a temperature characteristics, so that the identification signal is temperature depending, wherein the mode detector is configured to perform a temperature measurement in the sensor head.

In case the identification unit is provided in the interior of the sensor head or otherwise in close proximity to the sensing element, the electrical property of the identification unit might have a temperature characteristics. So, in addition to identification of the type of the sensor head by reading out the identification signal, a temperature measurement may be carried out to determine under which temperature regime the sensing of the physical quantity has been made. Thus, a temperature compensation within the base unit as part of the preprocessing can be made in accordance with the known temperature dependency of the sensor element. Besides identifying the type of the sensor head, the identification unit can determine the temperature at which the measurement is made by the sensor head. This temperature often results in deviations of electrical characteristics of the sensor signal, which can be compensated accordingly in the measurement unit.

### Brief description of the drawings

Embodiments are described in more detail in conjunction with the accompanying drawings, in which:
- Figure 1: shows a measurement system having a base unit, a cable connection, and a sensor head;
- Figure 2: shows a flowchart illustrating the method for operating the measurement system;
- Figure 3: shows a measurement system in which multiple sensor heads of different types can be applied and be connected with different types of cable connections;

- Figure 4: shows a specific embodiment of a measurement system with two sensor heads of different types of coils as sensor elements; and
- Figure 5: shows a measurement system with multiple sensor heads of different types which can be connected with an additional second cable connector with separated different cable connections of different lengths and electrical properties.

### Detailed description of embodiments

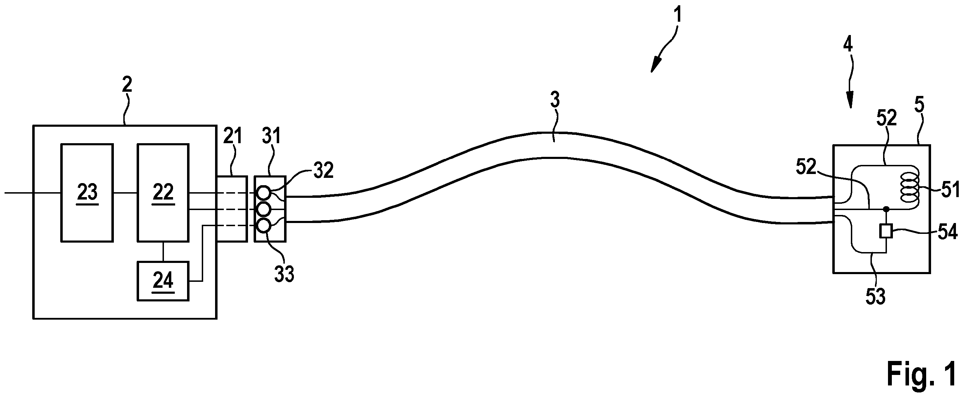

Figure 1 schematically shows a measurement system 1 according to one configuration. The measurement system 1 has a base unit 2 with a connector port 21.

A sensor unit 4 is provided which has a sensor head 5 and a cable connection 3. The cable connection 3 electrically connects a cable connector 31 and the sensor unit 4. The cable connector 31 is provided corresponding to the connector port 21 of the base unit 2 to provide electrical interconnections. The cable connection 3 is fixedly attached to the sensor head 5. The cable connector 31 is at the remote end of the cable connection 3. Therefore, the sensor unit 4 is attachable and detachable from the base unit 2.

The sensor unit 4 has a sensor head 5 with a sensing element 51 which e.g. allows to capacitively or inductively detect a physical property, such as a distance or the presence of a metallic object to measure a pressure. The sensing element 51 can be a coil or a probe. Furthermore, the sensing element 51 can include a piezo element for measuring pressure, strain or the like, an ultrasonic transducer for performing a distance measurement and an optical sensor.

The sensing element 51 is electrically connected via one or more sensing lines 52 which are fed through the cable connection 3, with a sensing terminal 32 of the cable connector 31.

The base unit 2 has a measurement unit 22 which can be operated in different operating modes according to the type of sensing head 5 attached. The type of sensing head 5 might define characteristics and properties of the used sensing element 51 which are considered by the operation mode of the measurement unit 22. The operation mode determines how the electrical representation of the physical quantity to be measured can be retrieved. For ohmic resistances the operation mode may provide that a measuring voltage or current is applied and the resulting current and voltage is measured respectively. For inductances or capacitances the operation mode can determine in which manner the measurement is performed. For instance, for measurement of the electrical property of the sensing element 51 a pulse induction response can be performed for a coil as a sensing element. In other words, the inductive response to a voltage or current pulse can be measured and analyzed if a coil is the sensing element 51. The measurement principle of the pulse induction response is known from e.g. EP4030622A1, EP4030199A1, EP492029B1, and "Microcontroller P.I. Treasure Hunter" by Mark Stuart, Issue June 1994, Vol. 23.

Also, a resonance circuit can be formed together with the measurement unit 22 and an oscillation is triggered to obtain characteristics of the electrical response depending on the electrical property of the sensing element 51, such as an amplitude a phase shift or a frequency. Other operation modes can be applied to retrieve electrical characteristics depending on the type of the used sensing element 51.

The measurement unit 22 receives an electrical sensor signal indicating the electrical characteristics which can be preprocessed, such as preamplified, filtered and/or temperature-compensated or the like in a preprocessing unit 23. The output of the preprocessing unit 23 is a measurement signal corresponding to or indicating the physical quantity to be measured and which can be further used in a downstream application.

The operation mode is selected depending on an identification signal representing an electrical property, which can be obtained over an identification terminal 33 of the sensor head 5 or the cable connector 31.

The identification terminal 33 may be connected with an identification unit 54 which may comprise one or more or passive dipoles or electronic components, such as a resistor, a capacitance, an inductivity, a transistor, a diode, or the like as the identification unit 54. The identification unit 54 can be electrically connected between the identification line 53 or the identification terminal 33 and one of the sensing lines 52 or one of the sensing terminals 32, respectively. The identification unit 54 can also be electrically connected between two sensing lines 53 or between two sensing terminals 33 of the cable connector 31.

The sensing lines 52 and the identification line 53 of the sensor head 5 are connected via the cable connector 31 so that a mode detector 24 of the base unit 2 can make a measurement via the one or more identification terminals 33 to obtain an electrical identification signal based on the characteristics or electrical properties of the identification unit 54.

The identification signal is used in the measurement unit 22 to determine or to select an operation mode of the measurement unit 22.

For the measurement system 1, different sensor head types may be applied, each of which has a different unique identification unit 54 whose electrical properties are unique for the respective sensor head type. The sensor heads 5 of different sensor head types can be operated individually according to the detected electrical property. This allows to connect a broad variety of sensor head types not only for measuring a specific physical quantity with differing sensing ranges and sensitivities, but also to attach different sensor types for measuring different physical quantities which are detected with different measurement methods.

For example, sensor head types may include sensor heads with a piezo sensor for pressure measurement and coils for proximity measurement of metallic objects. These sensor head types can be identified by different identification units 54. Once identified, the sensor head types can be used for a measurement according to the electrical characteristics of the sensing element. So, a capacitance measurement of the piezo element can be applied in one operating mode and a pulse induction response measurement of the coil can be made in another operating mode.

Furthermore, the identification unit 54 in the sensor head 5 may be provided with a predefined temperature characteristics so that a variation of the electrical property of the identification element can be detected in response to a specific temperature of the sensor head 5. The range of the electrical property depending on the temperature range is selected so that a unique identification of the attached sensor head 5 can be made and also the temperature of the sensor head environment can be detected without confusion about identification with other types of sensor heads 5. For instance, the identification unit may comprise an NTC resistor and an identification resistor in a serial connection, so that their resistance values add up. So, the measured resistance value really indicates the temperature of the sensor head 5 and the type of the sensor head 5. For instance, an identification of different sensor heads can be made with identification resistances of 100Ω, 500 Ω and 1000 Ω while the range of temperature characteristics may add up 50 Ω+/- 20 Ω. As the total resistance will remain in the range of 100Ω, 500 Ω and 1000 Ω, respectively, a unique identification of the sensor head type can still be made.

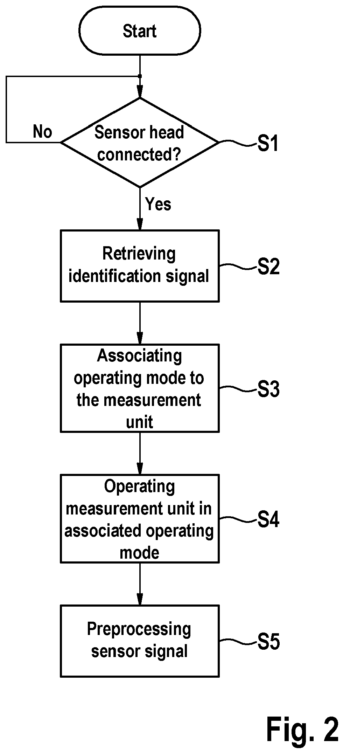

In Figure 2, a flowchart is provided which illustrates the method for operating the measurement system 1.

In step S1, it is checked whether the sensor head 5 is connected to the base unit 2. This detection can be made by checking the signals at the sensing and identification terminals of the cable connector 31 whether or not the terminals are open circuit. Once a state different from an open circuit can be detected at the identification terminal 33 (Alternative: Yes), it is found that a sensor head 5 is connected with the base unit 2 and the process is continued with step S2. Otherwise (alternative: No), it is returned to step S1.

In step S2, an identification signal is retrieved from the sensor head 5. This is made by detecting an electrical property via the one or more identification terminals 33. This can be made by applying a voltage or a current to the identification terminal 33. This allows a measurement of a resistance by detecting a current or voltage, respectively. Otherwise, an inductance or capacity can be detected via the identification terminal 33, by applying an AC voltage to detect the value of a resulting phase shift.

Measuring the value corresponding to the identification signal results in an identification signal corresponding to the electrical property of the identification unit 54. The identification signal can be associated, e.g. via a lookup table in the measurement unit 22, to an operating mode in step S3.

As the electrical properties of the identification unit 54 are unique for a specific type of sensor head 5, the operating mode can be selected accordingly. The operating mode allows the measurement unit 22 to operate the sensing element 51 according to the dedicated scheme and to make accurate measurements of the physical quantity to be detected.

Once the identification signal has been detected in step S2, the association to the operating mode is made. The value of the identification signal is analyzed to find, e.g. from an association table, the closest value which can be associated to a respective operating mode. The operating mode is selected according to the found closest value. A deviation of the value of the identification signal from the closest value is related to the temperature dependency. Furthermore, the identification signal can be communicated to a higher-level control or monitoring unit.

In step S4, the measurement unit 22 is operated according to the operation mode to operate the sensing element 51 in the sensor head 5 to detect the physical quantity accordingly and to provide a sensor signal.

For instance, for a coil as a sensing element 51 a resistance value may be changed in the measurement unit 22 in order to change the characteristics of the circuit. This is necessary because the inductances of the coil may differ and therefore the (parasitic) natural resonance of the system consisting of cable connection 3 and coil 51 must be damped more strongly/differently in order not to falsify the actual measurement signal. In addition, a switching threshold may be adjusted in the measurement unit 22 in order to adapt the desired switching distance of a proximity sensor formed by the sensor head 5.

If a pulse reduction response method is used the also the time parameters of the measurement can be changed such as the duration of the excitation pulse or the time instants for monitoring the pulse response. Furthermore, an adaptation of the data filtering or preprocessing or the like can be made depending on the operating mode.

Furthermore, the operation of the measurement unit 22 may be made depending on the deviation of the value of the identification signal from the closest value to reflect the temperature dependency.

In step S5 the sensor signal is preprocessed in the preprocessing unit 23 to obtain the measurement signal.

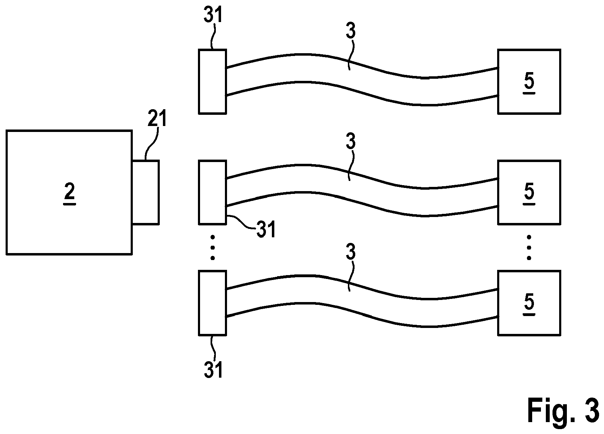

Figure 3 shows the measurement system 1 with multiple sensor heads 5 of different types which can be alternatively connected to the base unit connector 31.

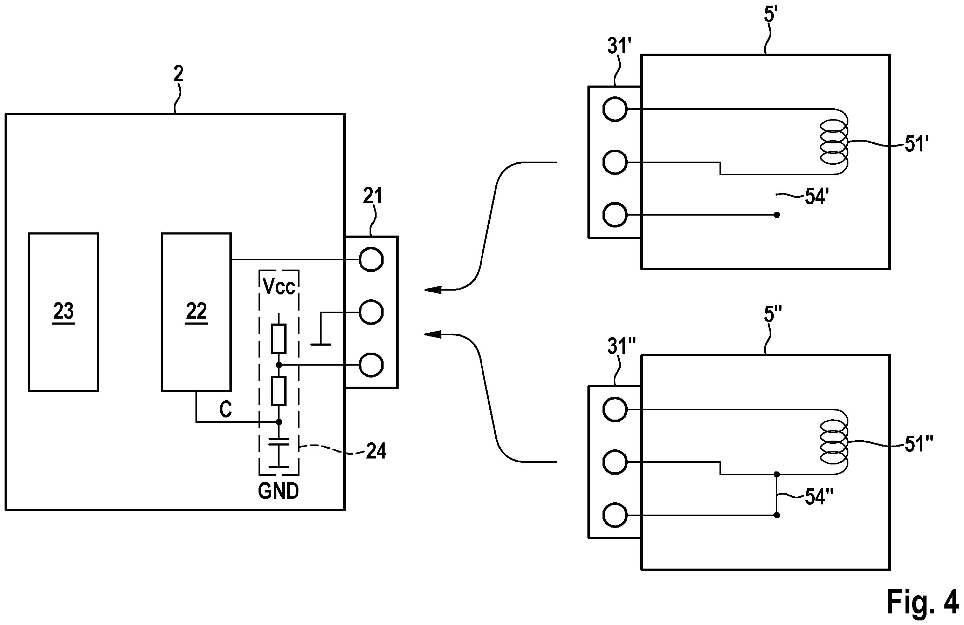

Figure 4 shows a specific embodiment of a measurement system 1 with two sensor heads 5',5" of different types of coils 51',51" as sensor elements. The sensor heads 5', 5" can be alternatively connected to the base unit connector 31. The coils 51', 51" of the sensor heads 5', 5" have different electrical characteristics. The sensor heads 5', 5" include different identification units 54', 54" which are configured to provide an open circuit (very high resistance 54') and a short circuit (54" very low resistance). The mode detector 24 of the base unit 2 has a driver circuit which provides a digital control signal to the measurement unit 22 to indicate the operating mode to be selected. In one example the digital control signal may connect an impedance to the circuitry of the measurement unit 22 by means of a semiconductor switch to adapt the measurement unit to the respective type of coil 51', 51".

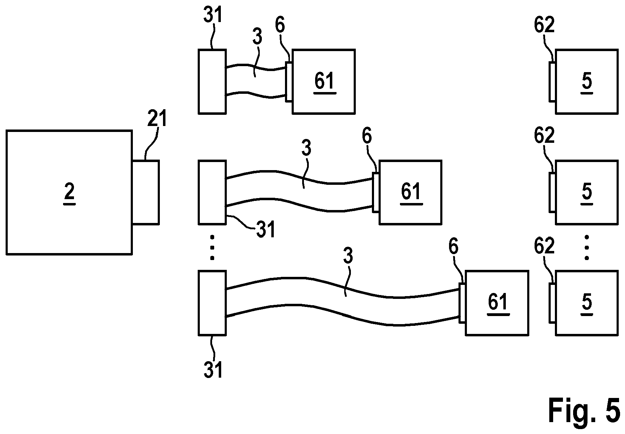

Figure 5 shows the measurement system 1 with multiple sensor heads 5 of different types which can be connected with an additional second cable connector 61 with separated different cable connections 3 of different lengths and electrical properties. The second cable connector 61 can be connected with a second connector port 62 at the sensor head 5. The cable connections 3 can be provided with a second identification unit 6, which may be formed similarly to the first identification unit 54. The second identification unit 6 can be electrically connected with the first cable connector 31 so that the base unit 2 can detect the type of the cable connection 3 and the type of the sensor head 5 separately and select the operation mode accordingly. Particularly, the cable connection can be identified in terms of its resistance and capacity which basically depend on its length. This allows to adapt the operation mode to different resistances and capacitances of the cable connector 3 depending on its length and type.

## Claims

1. A measurement system (1) comprising:
- A base unit (2) having a measurement unit (22) and a mode detector;
- A sensor head (5) for detecting a physical quantity, which is detachably electrically connected with the base unit (2), the sensor head (5) comprising:
∘ a sensing element (51) which provides an electrical property,
∘ an identification unit (54) to provide an electrical property or an identification signal,
wherein the mode detector (24) is configured to obtain an identification signal from or by means of the identification unit (54),
wherein the measurement unit (22) is configured to operate the sensing element (51) to obtain a sensor signal according to one selected operating mode selected from multiple operating modes.

2. The measurement system (1) according to claim 1, wherein the operating mode includes applying a measurement method to detect a short-circuit or an open circuit or to measure a resistance, a capacity, an inductance, a frequency, an amplitude or a phase shift as the identification signal.

3. The measurement system (1) according to claim 1 or 2, wherein the operating mode defines a specific transfer function to define the generation of the sensor signal from the electrical property of the sensing element (51), wherein particularly the specific transfer function is determined by a resistance, a capacity and/or an inductance to be selectively activated within the measurement unit (22).

4. The measurement system (1) according to any of the claims 1 to 3, wherein the identification signal is received in the base unit (2) via at least one identification terminal, and wherein the sensor signal is received in the base unit (2) via at least one sensing terminal.

5. The measurement system (1) according to claim 4, wherein the identification signal provides an electrical characteristics such as an impedance and/or diode characteristics, wherein the identification signal further includes information about a reference terminal with which the identification unit (54) is connected, such as one of the at least one sensing terminals (32) or another one of the at least one identification terminals (33).

6. The measurement system (1) according to any of the claims 1 to 5 wherein the identification unit (54) is coupled with at least one identification terminal (33) and either with a sensing terminal (32) which is coupled with the sensing element (51) or with another identification terminal (33).

7. The measurement system (1) according to any of the claims 1 to 6 wherein the at least one identification unit (54) has temperature characteristics, so that the identification signal is temperature depending, wherein the mode detector (24) is configured to perform a temperature measurement in the sensor head (5).

8. A base unit (2) for a measurement system (1) according to any of the claims 1 to 7, comprising:
- a measurement unit (1), and
- a mode detector (24),
wherein the mode detector (24) is configured to obtain an identification signal via a base unit connector,
wherein the measurement unit (1) is configured to electrically operate sensing terminals (32) to obtain a sensor signal according to one selected operating mode selected from multiple operating modes.

9. A sensor head (5) for a measurement system (1) according to any of the claims 1 to 7, comprising:
- a sensing element (51) which provides an electrical property,
- an identification unit (54).

10. Method for operating a measurement system (1) to obtain a sensor signal according to any of the claims 1 to 7, comprising the steps of:
- obtaining an identification signal by probing the identification unit (54);
- selecting an operating mode from multiple operating modes;
- operating the sensing element (51) to obtain the sensor signal according to the selected operating mode.
